# EUROPEAN PATENT SPECIFICATION

(11) **EP 4 489 376 B1**
(45) Date of publication and mention of the grant of the patent: **13.05.2026**
(21) Application number: 23762829.2
(22) Date of filing: 24.02.2023
(51) Int. Cl.: H04L 67/14, H04L 67/1095, H04L 67/1001, H04L 65/40, H04L 67/142, H04L 67/145, H04L 67/146, H04L 67/56, H04L 67/568, H04L 67/5682

(54) **SESSION STATE MANAGEMENT METHOD AND SYSTEM, APPARATUS, DEVICE, AND STORAGE MEDIUM**
SITZUNGSSTATUSVERWALTUNGSVERFAHREN UND -SYSTEM, VORRICHTUNG, VORRICHTUNG UND SPEICHERMEDIUM
PROCÉDÉ ET SYSTÈME DE GESTION D'ÉTAT DE SESSION, APPAREIL, DISPOSITIF, ET SUPPORT DE STOCKAGE

(30) Priority: 01.03.2022 CN 202210195846
(43) Date of publication of application: 08.01.2025
(73) Proprietor: BIGO TECHNOLOGY PTE. LTD., Singapore 117440 (SG)
(72) Inventor: Lin, Jinjia, Guangzhou, Guangdong 511402 (CN)
(74) Representative: Yang, Shu
(86) International application number: PCT/CN2023/078217
(87) International publication number: WO 2023/165429

(56) References cited:
- CN-A- 102 664 909
- CN-A- 104 380 278
- CN-A- 106 921 721
- CN-A- 107 517 227
- CN-A- 109 361 778
- CN-A- 110 769 019
- CN-A- 110 839 084
- CN-A- 113 645 261
- CN-A- 114 584 602
- CN-B- 104 735 098
- JP-A- 2007 316 837
- US-A1- 2007 033 284
- US-A1- 2021 263 779
- US-B1- 9 171 019

## Description

### TECHNICAL FIELD

Embodiments of the present disclosure relate to the field of computer technologies, and in particular, relate to a method and system for managing a session state, a processing server, and a storage medium.

### BACKGROUND

Currently, with the iterative update of various social application products, various scenarios demanding temporary sessions in the applications are increasing, such as instant audio and video sessions between users and games initiated by matching. In these session scenarios, it is necessary to manage the session state to achieve the corresponding service functions (e.g., deducting game items according to the session time).

CN104735098B discloses a session information control method and system. The session information control method includes the steps that an interceptor intercepts a visit request to a certain application server in a server cluster of a user, a session is created and a session mark is distributed according to the visit request, the session mark is stored in a client, session information is created in the certain application server in the server cluster, and the session information is synchronized in all application servers in a data synchronizing server cluster; when the interceptor captures session information updating, the interceptor synchronously updates the corresponding session information of all the application servers in the cluster according to the session mark. By means of the session information control method and system, the session information can be synchronously updated in the server cluster, the universality is high, efficiency is high, and the required storage space is small.

US2021/263779A1 discloses embodiments of systems, apparatuses and methods providing enhanced function as a service (FaaS) to users, e.g., computer developers and cloud service providers (CSPs). A computing system configured to provide such enhanced FaaS service include one or more controls architectural subsystems, software and orchestration subsystems, network and storage subsystems, and security subsystems. The computing system executes functions in response to events triggered by the users in an execution environment provided by the architectural subsystems, which represent an abstraction of execution management and shield the users from the burden of managing the execution. The software and orchestration subsystems allocate computing resources for the function execution by intelligently spinning up and down containers for function code with decreased instantiation latency and increased execution scalability while maintaining secured execution. Furthermore, the computing system enables customers to pay only when their code gets executed with a granular billing down to millisecond increments.

CN109361778A discloses a method and terminal for managing a session. The method includes the steps: S1, when an application server receives a session request from a load balancer, a Session ID corresponding to the session request is acquired; S2, a Hash value corresponding to the Session ID is calculated according to a preset Hash algorithm to obtain a first Hash value; and S3, two or more Memcached cache servers corresponding to the first Hash value synchronously manage session information corresponding to the Session ID, wherein the Hash value and the Memcached cache servers have a one-to-many relationship. The efficiency that a user accesses different pages on the same website is improved.

### SUMMARY

Embodiments of the present disclosure provide a method and system for managing a session state, a processing server, and a storage medium.

The invention is set out in the appended set of claims.

### BRIEF DESCRIPTION OF THE DRAWINGS

FIG. 1 is a flowchart of a method for managing a session state according to some embodiments of the present disclosure;
FIG. 2 is a schematic structural diagram of a system for managing a session state according to some embodiments of the present disclosure;
FIG. 3 is a flowchart of session state management for session creation in some embodiments of the present disclosure;
FIG. 4 is a flowchart of session state management during heartbeat monitoring in some embodiments of the present disclosure;
FIG. 5 is a flowchart of session state management for ending a session in some embodiments of the present disclosure;
FIG. 6 is a flowchart of session state management during audio and video connections in some embodiments of the present disclosure;
FIG. 7 is a schematic structural diagram of a processing server according to some embodiments of the present disclosure; and
FIG. 8 is a schematic structural diagram of a device for managing a session state according to some embodiments of the present disclosure.

### DETAILED DESCRIPTION

For clearer descriptions of the objectives, technical solutions, and advantages of the present disclosure, specific embodiments of the present disclosure are further described in detail below with reference to the accompanying drawings. It can be understood that the specific embodiments described herein are merely used for explaining the present disclosure and are not limitations to the present disclosure. In addition, it shall be noted that for convenience of description, only the portions associated with the present disclosure, rather than the entire content, are shown in the accompanying drawings. Before further discussing exemplary embodiments in detail, it should be noted that some exemplary embodiments are described as processes or methods depicted as flowcharts. Although a flowchart describes operations (or steps) as sequential processes, many of the operations may be performed in parallel, concurrently, or simultaneously. In addition, the order of the operations may be rearranged. The process may be terminated in the case that its operations are completed, but there may be additional processes that are not included in the accompanying drawings. The process may correspond to a method, a function, a procedure, a subroutine, a subprogram, and the like.

The existing methods for managing session states are mainly adopting a multipoint server, in which each server acquires the relevant session data of the region to which the server belongs, and updates the session state to a cache based on the session data, to achieve session state management. By using multipoint servers, the concurrent processing capability for session data can be improved, and the data processing pressure of a single server can be reduced.

However, managing session states simply using a multipoint server results in decentralized management of session data for both parties of a session, making it difficult to ensure the consistency and timeliness of data storage. Therefore, the effectiveness of session state management is affected, causing errors in the related service processing.

The present disclosure provides a method and system for managing a session state and aims to select a processing server to receive a service processing result and update a session state based on the mapping information between the service processing result and a processing server corresponding to the service processing result included in the session identifier, and synchronize the session state to the cache of each region through a local cache. In this way, all session data of a session service can be ensured to be forwarded to the same processing server for processing, avoiding decentralized data processing and ensuring the consistency and timeliness of session state data storage. Traditional session state management solutions mainly adopt the following management modes.

1. Single-point processing mode: A single-point server provides session state management functions, and interacts with local databases and caches to manage session state information. The mode does not allow the backend to provide services in the case of a single-point server failure. Global session state service processing must be sourced back to the server, and cross-region processing service entails increased delay and a higher rate of request failures.

2. Multipoint processing mode: A plurality of servers of various regions provide session state management functions, and each server interacts with local databases and caches to manage session state information. The multipoint server causes user data to be dispersed and inconvenient to manage. In the case that asynchronously synchronizing databases and caches are used, it is difficult to ensure the consistency and timeliness of data. In the case that strongly consistent databases and caches are used, the service processing capability is reduced and the delay of the request processing is increased.

3. Partitioned processing mode: Users choose to join a service region to interact with other users in the same service region. However, users in different service regions cannot interact with each other, which is equivalent to isolating user sessions of different service regions. The user numbers of different service regions are possibly uneven, placing more service pressure on service regions with a larger user base.

4. A mode of independent processing by service parties: Each service party independently implements a session state management system based on their own needs and actual conditions. As session state data is not shared between service parties, a user possibly exists in multiple sessions of different services simultaneously. Therefore, the development and maintenance costs of session management systems and the likelihood of system errors are increased.

Obviously, the existing session state management modes cannot ensure the consistency of session state information storage, and therefore, the method and system for managing the session state according to the embodiments of the present disclosure are provided to solve the technical problem of poor consistency in existing session state management.

### Embodiments:

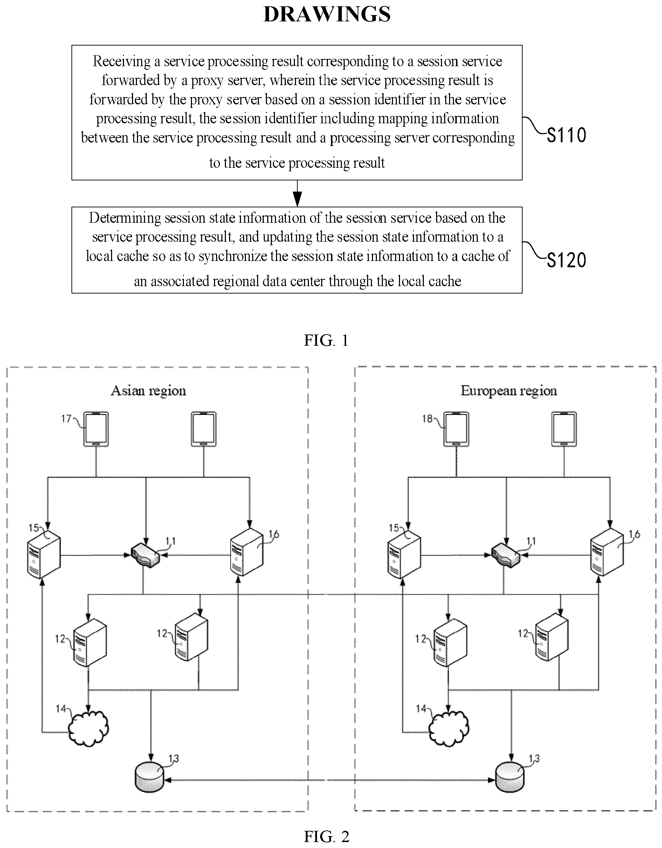

FIG. 1 shows a flowchart of a method for managing a session state according to some embodiments of the present disclosure. The method for managing the session state provided in the embodiments is applicable to a device for managing a session state, wherein the device for managing the session state is implemented through a software and/or hardware manner, and the device for managing the session state consists of two or more physical entities, or is implemented by one physical entity. In general, the device for managing the session state is a computing device such as a processing server of a system for managing a session state.

The following description is given by taking a processing server as the subject that performs the method for managing the session state as an example. Referring to FIG. 1, the method for managing the session state specifically includes the following processes.

In S110, a service processing result corresponding to a session service forwarded by a proxy server is received, wherein the service processing result is forwarded by the proxy server based on a session identifier in the service processing result, wherein the session identifier includes mapping information between the service processing result and a processing server corresponding to the service processing result.

In S120, session state information of the session service is determined based on the service processing result, and the session state information is updated to a local cache so as to synchronize the session state information to a cache of an associated regional data center through the local cache.

In the embodiments of the present disclosure, the method for managing the session state described above is performed through the processing server to achieve session state management. For any service demand party, session state management can be performed in a global service through the processing server described above. By providing a system for managing a session state that includes the processing server, the session states between various clients are created, managed, and monitored. The processing server provides a unified session state management interface. For a session service between both parties of a session, the service processing result of each service generated from the session service is reported to the processing server, such that session state management is performed based on the processing server.

It should be noted that the service processing result described above is generated by a service processor processing session services. In the case that the service processor processes one session service between both parties of a session, the service processor generates a plurality of corresponding services, such as creating a session, connecting streaming media, ending a session, and other services. Upon processing the services described above according to its own service logic, the service server generates corresponding service processing results, and then reports the service processing results to the processing server through the proxy server, such that session state management between both parties of the session is performed through the processing server.

Specifically, the system for managing the session state according to the embodiments of the present disclosure includes a service server, a proxy server, a processing server, and a local cache, wherein the service server is configured to process a session service from a first client to a second client, generate a service processing result corresponding to the session service, and report the service processing result to the proxy server; the proxy server is configured to forward the service processing result to the processing server corresponding to the service processing result based on a session identifier in the service processing result, wherein the session identifier includes mapping information between the service processing result and the processing server corresponding to the service processing result; the processing server is configured to receive the service processing result corresponding to the session service forwarded by the proxy server, determine session state information of the session service based on the service processing result, and update the session state information to the local cache; and the local cache is configured to store and synchronize the session state information to a cache of an associated regional data center.

In some embodiments, referring to FIG. 2, a schematic structural diagram of a system for managing a session state according to some embodiments of the present disclosure is provided. When processing a session service initiated by an Asian region client 17 to a European region client 18, the session service is first processed by a service server 15 of the client 17 and the client 18. In the case that a streaming media connection service is included in the session service, the session service is processed by a streaming media server 16. The service server 15 is configured to process various actual services of the session service, and directly interacts with the clients. The streaming media server 16 is responsible for providing communication services of streaming media such as video and audio. The service server 15 and the streaming media server generate a service processing result in the case of providing the corresponding service, and transmit the service processing result to a proxy server 11, such that the service processing result is forwarded to a corresponding processing server 12 through the proxy server 11, and the processing server 12 manages the session state based on the method for managing the session state described above. In addition, in some embodiments, part of client requests, such as heartbeat requests for monitoring the session connection state of a client, are directly reported to the proxy server 11, and forwarded to the corresponding processing server 12 through the proxy server for processing.

It should be noted that, when forwarding the service processing result, the proxy server 11 forwards the service processing result based on a session identifier in the service processing result. Because the session identifier includes mapping information between the service processing result and the processing server 12 corresponding to the service processing result, in the case that the client, the service server, or the streaming media service requires to interact with the processing server, the service processing result or the request is transmitted to the proxy server of the region to which the client, the service server, or the streaming media server belongs. The proxy server transmits, based on mapping information between the service processing result and the corresponding processing server 12, the service processing result or the request to the corresponding processing server for processing. Additionally, in the case that a session between two parties is initially created, the service server transmits the service processing result of the session creation to the proxy server. The proxy server selects, based on the region to which the client requesting session creation belongs, one processing server from various processing servers of the corresponding region to process various service processing results of the current session service. Then, a session identifier is generated based on mapping information between the service processing result and the corresponding processing server, and the currently received service processing result is transmitted to the corresponding processing server based on the session identifier. Meanwhile, the session identifier is returned to the service server, and added to the service processing results in subsequent uploads of the service processing results by the service server, thus facilitating the proxy server to determine a receiver corresponding to the service processing result.

In some embodiments, mapping information of the session identifier is represented using a hash value. In the case that the proxy server forwards the service processing result, the proxy server determines a target processing server by calculating the hash value, and then forwards the service processing result. Additionally, for two parties of a session being in different regions, to ensure that all service processing results are centralized to and processed by the same processing server, the session identifier is required to further include region information.

In some embodiments, in the case that client A initiates a session with client B, the proxy server of the region to which client A belongs selects one processing server from a plurality of processing servers within the region according to a set rule (e.g., a load balancing rule) to manage the session state between both parties. A session identifier for the current session is then generated, which identifies the region to which client A belongs and the processing server for managing the state of the current session. The session identifier is transmitted to both parties of the session and the service servers and the streaming media servers to which both parties belong, and thus the session identifier is added to the service processing results.

Subsequently, upon receiving the service processing result, the proxy server to which both parties of the session belong first determines, based on the session identifier, the region to which the identifier belongs, and then selects, through the consistent hash value of the session identifier, a corresponding processing server from the region, to which the service processing result is forwarded. As shown in FIG. 2, taking the session service from client 17 to client 18 as an example, one processing server 12 of the Asian region is selected in advance based on the session identifier to manage the session state of both parties of the session. The proxy servers of the regions to which client 17 and client 18 respectively belong, in the case of receiving the service processing result, select the corresponding processing server 12 of the Asian region to manage the session state based on the consistent hash value of the session identifier.

Additionally, as shown in FIG. 2, in the case that the processing server 12 acquires the service processing result and updates the session state, and the session state is determined to be changed, session state information is further updated to a pre-constructed message middleware 14. The message middleware 14 is configured to be used for the service server 15 to query session state information, so as to perform the corresponding session service logic.

Therefore, by generating a session identifier corresponding to the session service and forwarding service processing results based on the session identifier using a consistent forwarding rule, it can be ensured that all high-frequency operations for the same session service are sourced back to a sole processing server for serial execution, avoiding logical errors caused by decentralized session data processing and ensuring session data consistency. Additionally, by providing a multipoint processing server to manage the session states of different session services, the single-point failure issue is solved, and the likelihood of service unavailability due to single-point failures is reduced. Session state data is stored regionally and synchronized bidirectionally to the caches of various regions, enhancing disaster recovery capabilities and ensuring that the session state data is ultimately consistent. In the case that the number of users or services using the processing server increases, additional processing servers are employed in the data center to achieve smooth extension, thereby optimizing the session state management.

Specifically, the service processing results described above are generated in the case that the service server and the streaming media server process the corresponding session services. The service processing result records corresponding session state information which is specifically a session creation result, a session end result, or a streaming media connection result. The processing server executes the corresponding session state management logic according to the different service processing results received.

In the case that the service processing result is a session creation result, the processing server performs an initialization operation of the session service based on the session creation result, generates first state information, determines the first state information as the session state information, and updates the session state information to a local cache. Additionally, during the initialization operation, the processing server initializes a session timeout period of the session service based on the session creation result, and stores the session timeout period in the local cache, wherein the session timeout period is configured to detect a session connection state of a client.

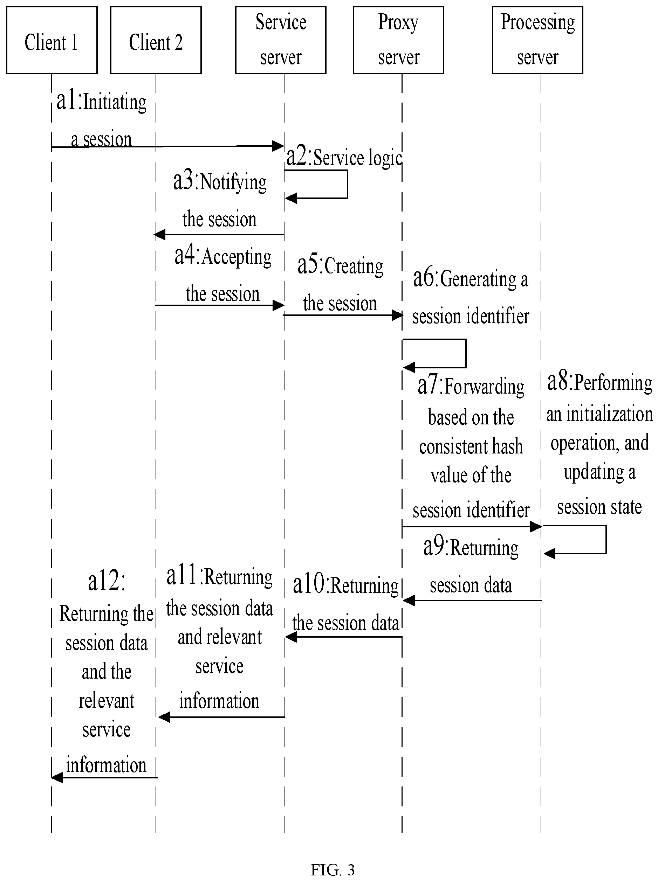

In some embodiments, referring to FIG. 3, a session state management flow of session creation including processes a1-a12 is provided. At the time of session creation, a session request is initiated by client 1 to client 2. The service server receives the session request and processes the service logic. The service server notifies the called party client 2 by means of offline or online notification. In the case that client 2 accepts the session, the service server transmits the session creation result of processing the session creation service to a proxy server of the region to which the service server belongs. The proxy server, according to the region in which the proxy server is deployed, generates a corresponding session state identifier and a flag for background verification. The proxy server then, based on the session state identifier, selects a processing server of the region corresponding to the proxy server for forwarding. Because the session identifier is created by the proxy server based on the region where the proxy server is located, a processing server in the same region must be selected to receive the service processing result herein. The processing server, upon receiving the service processing result, performs verification based on the flag generated by the proxy server, simultaneously determines whether both parties of the current session have an unfinished session, and in the case of yes, returns state error information.

In the case that the verification is completed and the states of both parties of the session are determined to be normal, the processing server confirms the successful creation of the current session based on the session creation result and initializes session data. The session timeout period of the clients for both parties of the session is set for subsequently checking the heartbeat of the client and determining whether a user is offline. In some embodiments, the processing server further sets a maximum timeout period of the current session, that is, the processing server actively closes the session in the case that the session exists for a period exceeding the maximum timeout period.

Additionally, because the session is just created, the initialization operation further initializes the session state. The initialization result of the session state is defined as the first state information, which is then stored as session state information in the local cache.

In the case that the operation described above is completed, the processing server generates session data based on the current session state and returns the session data to the service server. The session data is transmitted from the processing server to the proxy server, and then returned to the invoked service server by the proxy server. Upon receiving the session data and confirming the successful creation of the session, the service server notifies both clients of the corresponding session data and service data. Therefore, the clients create audio and video connections based on the session data, and process and display the corresponding service modules based on the service data.

In some embodiments, in the case that the processing server is processing a session creation result, the processing server further transmits a check request to the proxy server, thereby checking the current session state of the called party client through the proxy server, and then decides whether to continue the session service or stop the call and return a specific prompt to the calling party client.

Upon the processing server updating session state information to the local cache, the local cache synchronizes the data bidirectionally to caches of other global regions, ensuring that the session state information in all regions is ultimately consistent.

It should be noted that the session creation described above is a session manner for different scenarios such as a phone call and a game, and the processing server is only required to provide an interface to access a corresponding session creation result to perform the session state management of the corresponding session manner.

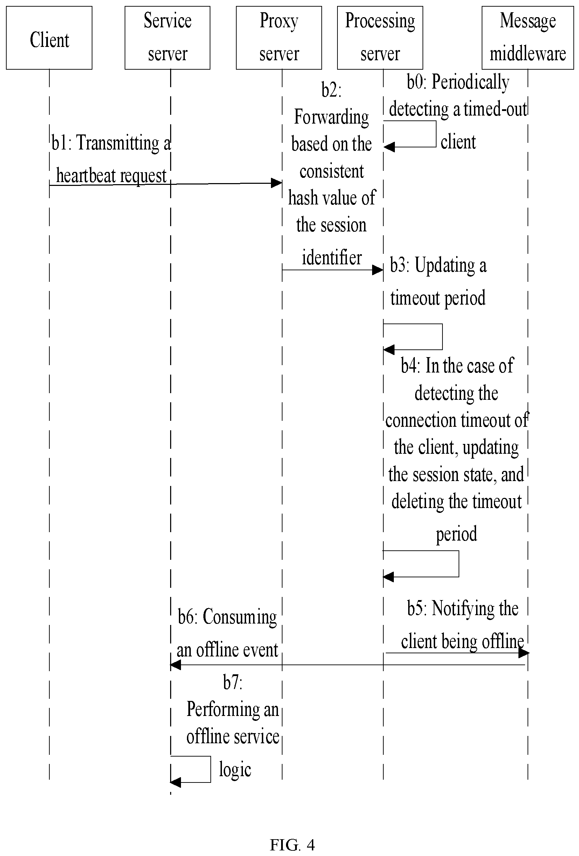

In some embodiments, based on the session timeout period of a client set by the initialization operation described above, the processing server periodically detects a client with connection timeout based on the heartbeat of the client. Referring to FIG. 4, a session state management flow of heartbeat monitoring including processes b1-b7 is provided. In the case of receiving a client heartbeat request forwarded by the proxy server within the session timeout period, the processing server updates the session timeout period based on the current time. In the case of not receiving the client heartbeat request forwarded by the proxy server within the session timeout period, the processing server determines that the client corresponding to the session service is in an offline state, updates the session state information in the local cache based on the offline state, and deletes the session timeout period.

As shown in FIG. 4, in the case that the client creates the session successfully, the heartbeat request is further required to be periodically transmitted to the processing server through the proxy server, ensuring that the processing server can monitor the session condition and timely check whether the client state is abnormal. The processing server, upon receiving the heartbeat request of the client, updates the timeout period corresponding to the client. The timeout period is updated by adding the current time with the timeout period of the client prior to the update.

Upon successfully initializing the session timeout period of the client, the processing server starts to periodically check whether the user is timed out.

In the case that the processing server does not receive a heartbeat request from a specific client for a long time and the session timeout period of the client is reached, the processing server updates the session state to be that the client is offline, and removes the timeout period of the client (the client is not checked again in subsequent periodical checks). Additionally, the client offline event is logged to the message middleware. Because the service server actively consumes events in the message middleware, upon acquiring the message of the client being offline, the service server performs the corresponding client offline service logic.

Then, in the case that the client that is supposed to be offline retransmits the heartbeat request, the processing server renews the timeout period of the client. Additionally, the client reconnection event is logged to the message middleware. The service server actively consumes the events in the message middleware, and upon acquiring the message of the client being reconnected, performs the corresponding service logic.

By monitoring the connection state of the client, the change of the session state of the user is notified to the service side in real-time, and different services are isolated from each other and do not interfere with each other. Therefore, the pressure of the deployed service is reduced without affecting user experience.

**In** some embodiments, in the case that the service processing result is a session end result, the processor, when managing the session state, acquires a first distributed lock corresponding to the session end result based on the session identifier, wherein the first distributed lock is configured to prohibit initiating a session end request corresponding to the session service again; and generates second state information based on the session end result, and determines the second state information as the session state information and updates the session state information to the local cache. Subsequently, the session timeout period of the client is deleted.

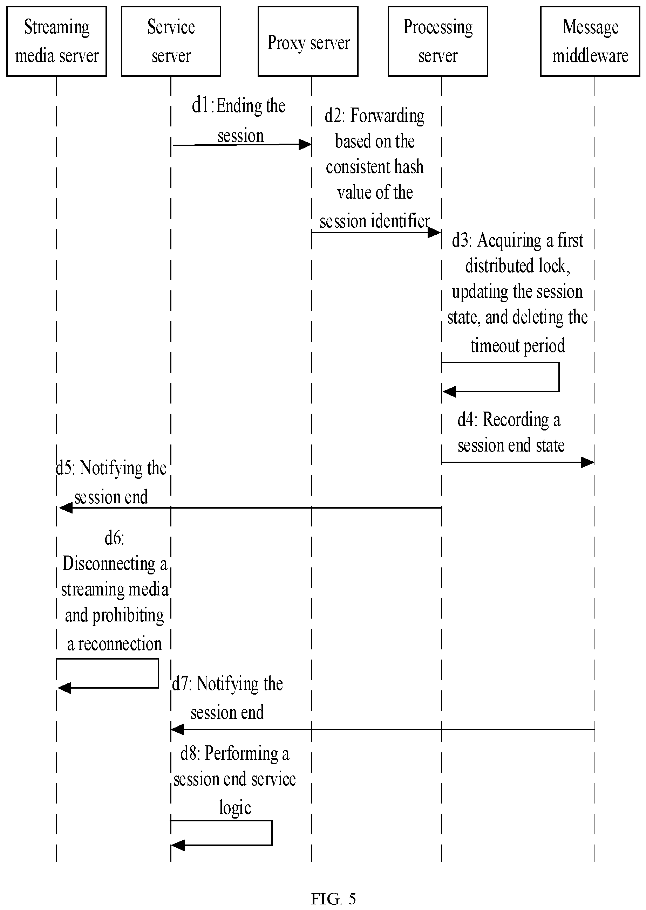

Referring to FIG. 5, a session state management flow for ending a session including processes d1-d8 is provided. In the case that the service server determines that the current session is ended, the service server transmits a session end result to a nearest proxy server. The proxy server forwards the session end result to the sole corresponding processing server based on the session identifier. The processing server, upon receiving the session end result, first acquires the distributed lock of the current session end result based on the session identifier, and defines the distributed lock as a first distributed lock. Other session ending requests of the session service are prohibited through the first distributed lock, ensuring that all operations of the same session service are processed serially. Then, the timeout period corresponding to the client and the session is removed and the session state is updated. The session end state is defined as second state information, and the second state information is determined as the session state information, and updated to the local cache. Additionally, the session end state is logged to the message middleware, and then the streaming media server and the service server are notified with the end of the session, such that the streaming media server and the service server execute the service logic corresponding to the end of the session.

In some embodiments, the session end result is that the service server consumes the user offline event and ends the session automatically; or that the session is actively ended by a client user operation; or that in the case that the session is timed out, the processing server actively ends the session and notifies the service server through the message middleware. The embodiments of the present disclosure do not impose a fixed limitation on the session ending manner, and are not described herein for further details.

In addition, in some embodiments, concerning a result of creating a streaming media connection reported by the streaming media server, the embodiments of the present disclosure perform session state management by using an independent processing logic. In the case that the service processing result is a streaming media connection result for audio and video, the processing server, when managing the session state, acquires a second distributed lock corresponding to the streaming media connection result based on the session identifier, wherein the second distributed lock is configured to prohibit initiating a streaming media connection request corresponding to the session service again; generates third state information based on the streaming media connection result, determines the third state information as the session state information, and updates the session state information to the local cache; and initializes a streaming media connection timeout period, wherein the streaming media connection timeout period is configured to detect a streaming media connection state of a client.

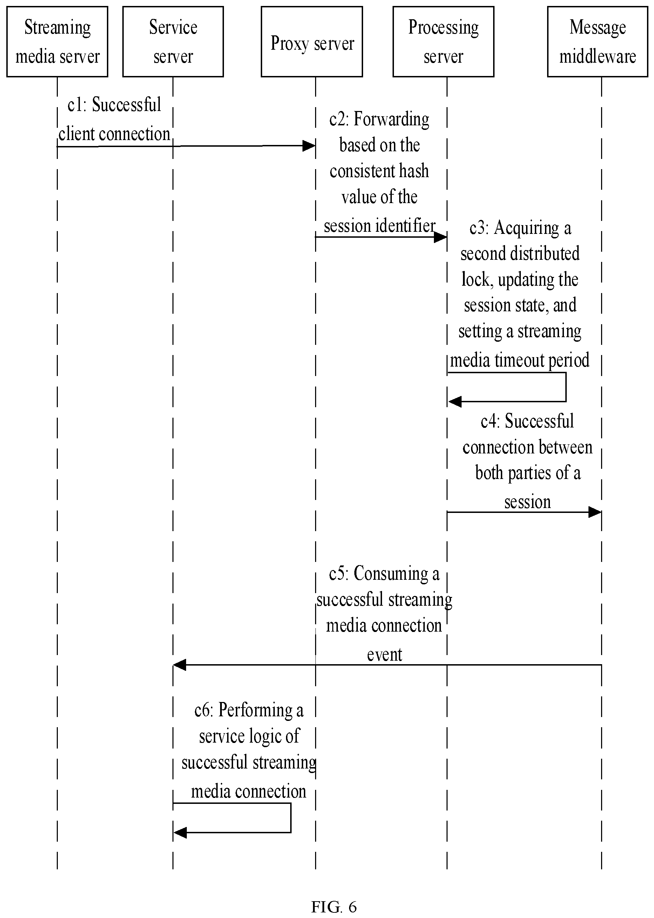

Specifically, referring to FIG. 6, a session state management flow of audio and video connection including processes c1-c6 is provided. In the case that the streaming media server determines that the client connection is successful, the streaming media server, based on the streaming media connection result, notifies the processing server of the successful streaming media connection of the corresponding client through the proxy server. The processing server, upon receiving the streaming media connection result, first acquires the distributed lock corresponding to the streaming media connection result based on the session identifier, and defines the distributed lock as a second distributed lock. The second distributed lock is configured to prohibit initiating a streaming media connection request corresponding to the session service again, avoiding multiple streaming media connections for the same client at the same time and ensuring that all operations of the same session service are processed serially. Then, state information is generated based on the streaming media connection successful state, and is defined as third state information. The third state information is determined as the session state information, and updated to the local cache.

Furthermore, the timeout period of the streaming media connection of the corresponding client is set. In the case that the processing server determines that both parties of the session are successfully connected, the processing server records the session state as the formal start of the streaming media session, and records the session state to the message middleware. Then, the service server acquires the message that both parties of the session are successfully connected by actively consuming the event in the message middleware, and performs the corresponding service logic.

The processing server acquires corresponding session states for different service processing results and updates the session states to the local cache, such that the session state management flow of the embodiments of the present disclosure is achieved.

As described above, by means of receiving a service processing result corresponding to a session service forwarded by a proxy server, the session state information of the session service is determined based on the service processing result. Then, the session state information is updated to a local cache so as to synchronize the session state information to a cache of an associated regional data center through the local cache. The proxy server forwards the service processing result based on a session identifier in the service processing result, wherein the session identifier includes mapping information between the service processing result and a processing server corresponding to the service processing result. By utilizing the technical means described above, a service processing result is forwarded to a corresponding processing server based on a session identifier for processing and recording a session state, and the session state is synchronized through a local cache, such that the session state management of both parties of a session can maintain a higher level of consistency, and the timeliness of session state storage is improved. Meanwhile, the decentralized management of session data is avoided, thus optimizing the effectiveness of session state management.

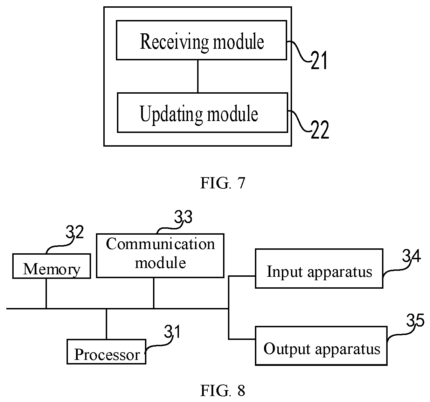

Based on the embodiments described above, FIG. 7 is a schematic structural diagram of a processing server according to the present disclosure. Referring to FIG. 7, the processing server provided in the embodiments specifically includes: a receiving module 21 and an updating module 22.

The receiving module 21 is configured to receive a service processing result corresponding to a session service forwarded by a proxy server, wherein the service processing result is forwarded by the proxy server based on a session identifier in the service processing result, the session identifier including mapping information between the service processing result and a processing server corresponding to the service processing result.

The updating module 22 is configured to determine session state information of the session service based on the service processing result, and update the session state information to a local cache so as to synchronize the session state information to a cache of an associated regional data center through the local cache.

Specifically, the updating module 22 is further configured to update the session state information to a pre-constructed message middleware, wherein the message middleware is configured to be used for a service server to query the session state information, and the service server is configured to process the session service, generate the service processing result, and report the service processing result to the proxy server.

Specifically, the service processing result is a session creation result. The updating module 22 is configured to perform an initialization operation of the session service based on the session creation result, generate first state information, and determine the first state information as the session state information and update the session state information to the local cache. The updating module further initializes a session timeout period of the session service based on the session creation result, and stores the session timeout period in the local cache, wherein the session timeout period is configured to detect a session connection state of a client. Then, in the case of receiving a client heartbeat request forwarded by the proxy server within the session timeout period, the module updates the session timeout period based on the current time. In the case of not receiving the client heartbeat request forwarded by the proxy server within the session timeout period, the module determines that the client corresponding to the session service is in an offline state, updates the session state information in the local cache based on the offline state, and deletes the session timeout period.

Specifically, the service processing result is a session end result. The updating module 22 is configured to acquire a first distributed lock corresponding to the session end result based on the session identifier, wherein the first distributed lock is configured to prohibit initiating a session end request corresponding to the session service again; generate second state information based on the session end result, and determine the second state information as the session state information and update the session state information to the local cache; and delete the session timeout period.

Specifically, the service processing result is a streaming media connection result. The updating module 22 is configured to acquire a second distributed lock corresponding to the streaming media connection result based on the session identifier, wherein the second distributed lock is configured to prohibit initiating a streaming media connection request corresponding to the session service again; generate third state information based on the streaming media connection result, and determine the third state information as the session state information and update the session state information to the local cache; and initialize a streaming media connection timeout period, wherein the streaming media connection timeout period is configured to detect a streaming media connection state of a client.

As described above, by means of receiving a service processing result corresponding to a session service forwarded by a proxy server, the session state information of the session service is determined based on the service processing result. Then, the session state information is updated to a local cache so as to synchronize the session state information to a cache of an associated regional data center through the local cache. The proxy server forwards the service processing result based on a session identifier in the service processing result, wherein the session identifier includes mapping information between the service processing result and a processing server corresponding to the service processing result. By utilizing the technical means described above, a service processing result is forwarded to a corresponding processing server based on a session identifier for processing and recording a session state, and the session state is synchronized through a local cache, such that the session state management of both parties of a session can maintain a higher level of consistency, and the timeliness of session state storage is improved. Meanwhile, the decentralized management of session data is avoided, thus optimizing the effectiveness of session state management.

The processing server provided by the embodiments of the present disclosure is configured to perform the method for managing the session state provided by the embodiments described above, and has corresponding functions and beneficial effects.

Based on the practical embodiments described above, the embodiments of the present disclosure further provide a device for managing a session state. Referring to FIG. 8, the device for managing the session state includes: a processor 31, a memory 32, a communication module 33, an input apparatus 34, and an output apparatus 35. The memory 32, as a computer-readable storage medium, is configured to store one or more software programs, one or more computer-executable programs, and one or more modules, such as program instructions/modules corresponding to the method for managing the session state according to any embodiment of the present disclosure (e.g., the receiving module 21 and the updating module in the processing server). The communication module 33 is configured to perform data transmission. By running one or more software programs, one or more instructions, and one or more modules stored in the memory, the processor 31 runs various functional applications and data processing of the device, to achieve the method for managing the session state described above. The input apparatus 34 is configured to receive input numeric or character information and produce key signal inputs related to user settings and function control of the device. The output apparatus 35 includes display devices such as a display screen. The device for managing the session state provided above is configured to perform the method for managing the session state provided by the embodiments described above, and has corresponding functions and beneficial effects.

Based on the embodiments described above, the embodiments of the present disclosure further provide a storage medium including one or more computer-executable instructions, wherein the one or more computer-executable instructions, when executed by a computer processor, cause the computer processor to perform the method for managing the session state. The storage medium is any of various types of memory devices or storage devices. In addition, according to the storage medium including one or more computer-executable instructions provided by the embodiments of the present disclosure, the one or more computer-executable instructions are not limited to the method for managing the session state described above, but can also be used to perform related operations in the method for managing the session state according to any embodiment of the present disclosure.

## Claims

1. A method for managing a session state, executed by a processing server, comprising: receiving (S110) a service processing result corresponding to a session service forwarded by a proxy server, wherein the service processing result is forwarded by the proxy server based on a session identifier in the service processing result to a processing server corresponding to the service processing result, the session identifier comprising mapping information between the service processing result and the processing server corresponding to the service processing result, wherein the service processing result is generated by a service server by processing a session service from a first client to a second client and reported by the service server to the proxy server; the processing server corresponding to the service processing result is pre-selected by the proxy server from a plurality of processing servers, and the session identifier is generated by the proxy server based on the mapping information between the service processing result and the corresponding processing server, returned to the service server, and added to service processing results in subsequent uploads of the service processing results by the service server; and the first client and the second client are in a same region or different regions, and in a case that the first client and the second client are in different regions, the session identifier further comprises region information; and
determining (S120) session state information of the session service based on the service processing result, and updating the session state information to a local cache so as to synchronize the session state information to a cache of an associated regional data center through the local cache.

2. The method for managing the session state according to claim 1, wherein, upon determining (S120) the session state information of the session service based on the service processing result, the method further comprises:
updating the session state information to a pre-constructed message middleware, wherein the message middleware is configured to be used for a service server to query the session state information, the service server being configured to process the session service and generate the service processing result, and report the service processing result to the proxy server.

3. The method for managing the session state according to claim 1, wherein the service processing result is a session creation result; and
determining (S120) the session state information of the session service based on the service processing result, and updating the session state information to the local cache, comprises:
performing an initialization operation of the session service based on the session creation result, generating first state information, and determining the first state information as the session state information and updating the session state information to the local cache.

4. The method for managing the session state according to claim 3, wherein performing the initialization operation of the session service based on the session creation result further comprises:
initializing a session timeout period of the session service based on the session creation result, and storing the session timeout period in the local cache, wherein the session timeout period is configured to detect a session connection state of a client.

5. The method for managing the session state according to claim 4, wherein, upon performing the initialization operation of the session service based on the session creation result, the method further comprises:
in a case that a client heartbeat request forwarded by the proxy server is received within the session timeout period, updating the session timeout period based on current time; and
in a case that the client heartbeat request forwarded by the proxy server is not received within the session timeout period, determining that a client corresponding to the session service is in an offline state, updating the session state information in the local cache based on the offline state, and deleting the session timeout period.

6. The method for managing the session state according to claim 4, wherein the service processing result is a session end result; and
determining (S120) the session state information of the session service based on the service processing result, and updating the session state information to the local cache, comprises:
generating second state information based on the session end result, and determining the second state information as the session state information and updating the session state information to the local cache.

7. The method for managing the session state according to claim 6, wherein, prior to determining the second state information as the session state information and updating the session state information to the local cache, the method further comprises:
acquiring a first distributed lock corresponding to the session end result based on the session identifier, wherein the first distributed lock is configured to prohibit initiating a session end request corresponding to the session service again; and
upon determining the second state information as the session state information and updating the session state information to the local cache, the method further comprises:
deleting the session timeout period.

8. The method for managing the session state according to claim 1, wherein the service processing result is a streaming media connection result; and
determining (S120) the session state information of the session service based on the service processing result, and updating the session state information to the local cache, comprises:
generating third state information based on the streaming media connection result, and determining the third state information as the session state information and updating the session state information to the local cache.

9. The method for managing the session state according to claim 8, wherein, prior to determining the third state information as the session state information and updating the session state information to the local cache, the method further comprises:
acquiring a second distributed lock corresponding to the streaming media connection result based on the session identifier, wherein the second distributed lock is configured to prohibit initiating a streaming media connection request corresponding to the session service again; and
upon determining the third state information as the session state information, the method further comprises:
initializing a streaming media connection timeout period, wherein the streaming media connection timeout period is configured to detect a streaming media connection state of a client.

10. A system for managing a session state, comprising: a service server (15), a proxy server (11), a processing server (12), and a local cache, wherein
the service server (15) is configured to process a session service from a first client to a second client, generate a service processing result corresponding to the session service, and report the service processing result to the proxy server (11);
the proxy server (11) is configured to forward the service processing result to the processing server (12) corresponding to the service processing result based on a session identifier in the service processing result, wherein the session identifier comprises mapping information between the service processing result and the processing server (12) corresponding to the service processing result, wherein the processing server corresponding to the service processing result is pre-selected by the proxy server from a plurality of processing servers, and the session identifier is generated by the proxy server based on the mapping information between the service processing result and the corresponding processing server, returned to the service server, and added to service processing results in subsequent uploads of the service processing results by the service server; and the first client and the second client are in a same region or different regions, and in a case that the first client and the second client are in different regions, the session identifier further comprises region information;
the processing server (12) is configured to receive the service processing result corresponding to the session service forwarded by the proxy server (11), determine session state information of the session service based on the service processing result, and update the session state information to the local cache; and
the local cache is configured to store and synchronize the session state information to a cache of an associated regional data center.

11. A processing server, comprising: a receiving module (21), configured to receive a service processing result corresponding to a session service forwarded by a proxy server, wherein the service processing result is forwarded by the proxy server based on a session identifier in the service processing result to a processing server corresponding to the service processing result, the session identifier comprising mapping information between the service processing result and the processing server corresponding to the service processing result, wherein the service processing result is generated by a service server by processing a session service from a first client to a second client and reported by the service server to the proxy server; the processing server corresponding to the service processing result is pre-selected by the proxy server from a plurality of processing servers, and the session identifier is generated by the proxy server based on the mapping information between the service processing result and the corresponding processing server, returned to the service server, and added to service processing results in subsequent uploads of the service processing results by the service server; and the first client and the second client are in a same region or different regions, and in a case that the first client and the second client are in different regions, the session identifier further comprises region information; and
an updating module (22), configured to determine session state information of the session service based on the service processing result, and update the session state information to a local cache so as to synchronize the session state information to a cache of an associated regional data center through the local cache.

12. A storage medium comprising one or more computer-executable instructions, wherein the one or more computer-executable instructions, when executed by a computer processor, cause the computer processor to perform the method for managing the session state as defined in any one of claims 1 to 9.

## Patentansprüche

1. Verfahren zum Verwalten eines Sitzungszustands, der von einem Verarbeitungsserver ausgeführt wird, umfassend: Empfangen (S110) eines Dienstverarbeitungsergebnisses, das einem von einem Proxy-Server weitergeleiteten Sitzungsdienst entspricht, wobei das Dienstverarbeitungsergebnis von dem Proxy-Server auf Grundlage einer Sitzungskennung in dem Dienstverarbeitungsergebnis an einen Verarbeitungsserver weitergeleitet wird, der dem Dienstverarbeitungsergebnis entspricht, wobei die Sitzungskennung Zuordnungsinformationen zwischen dem Dienstverarbeitungsergebnis und dem Verarbeitungsserver umfasst, die dem Dienstverarbeitungsergebnis entsprechen, wobei das Dienstverarbeitungsergebnis von einem Dienstserver durch Verarbeiten eines Sitzungsdienstes von einem ersten Client zu einem zweiten Client erzeugt und von dem Dienstserver an den Proxy-Server gemeldet wird; der Verarbeitungsserver, der dem Dienstverarbeitungsergebnis entspricht, von dem Proxy-Server aus einer Vielzahl von Verarbeitungsservern vorgewählt wird, und die Sitzungskennung durch den Proxy-Server auf Grundlage der Zuordnungsinformationen zwischen dem Dienstverarbeitungsergebnis und dem entsprechenden Verarbeitungsserver erzeugt, an den Dienstserver zurückgegeben und zu den Dienstverarbeitungsergebnissen in nachfolgenden Uploads der Dienstverarbeitungsergebnisse durch den Dienstserver hinzugefügt wird; und der erste Client und der zweite Client sich in derselben Region oder verschiedenen Regionen befinden, und in einem Fall, dass sich der erste Client und der zweite Client in verschiedenen Regionen befinden, die Sitzungskennung weiterhin Regionsinformationen umfasst; und
Bestimmen (S120) von Sitzungszustandsinformationen des Sitzungsdienstes auf Grundlage des Dienstverarbeitungsergebnisses und Aktualisieren der Sitzungszustandsinformationen an einen lokalen Zwischenspeicher, um die Sitzungszustandsinformationen über den lokalen Zwischenspeicher mit einem Zwischenspeicher eines zugeordneten regionalen Rechenzentrums zu synchronisieren.

2. Verfahren zum Verwalten des Sitzungszustands nach Anspruch 1, wobei das Verfahren beim Bestimmen (S120) der Sitzungszustandsinformationen des Sitzungsdienstes auf Grundlage des Dienstverarbeitungsergebnisses weiter umfasst:
Aktualisieren der Sitzungszustandsinformationen auf eine vorkonstruierte Nachrichten-Middleware, wobei die Nachrichten-Middleware dazu ausgebildet ist, für einen Dienstserver verwendet zu werden, um die Sitzungszustandsinformationen abzufragen, wobei der Dienstserver dazu ausgebildet ist, den Sitzungsdienst zu verarbeiten und das Dienstverarbeitungsergebnis zu erzeugen und das Dienstverarbeitungsergebnis an den Proxy-Server zu melden.

3. Verfahren zum Verwalten des Sitzungszustands nach Anspruch 1, wobei das Dienstverarbeitungsergebnis ein Sitzungserstellungsergebnis ist; und
Bestimmen (S120) der Sitzungszustandsinformationen des Sitzungsdienstes auf Grundlage des Dienstverarbeitungsergebnisses und Aktualisieren der Sitzungszustandsinformationen auf den lokalen Zwischenspeicher umfasst:
Durchführen eines Initialisierungsvorgangs des Sitzungsdienstes auf Grundlage des Sitzungserzeugungsergebnisses, Erzeugen von ersten Zustandsinformationen und Bestimmen der ersten Zustandsinformationen als die Sitzungszustandsinformationen und Aktualisieren der Sitzungszustandsinformationen an den lokalen Zwischenspeicher.

4. Verfahren zum Verwalten des Sitzungszustands nach Anspruch 3, wobei das Durchführen des Initialisierungsvorgangs des Sitzungsdienstes auf Grundlage des Sitzungserstellungsergebnisses weiter umfasst:
Initialisieren eines Sitzungs-Timeout-Zeitraums des Sitzungsdienstes basierend auf dem Sitzungserstellungsergebnis, und Speichern des Sitzungs-Timeout-Zeitraums in dem lokalen Zwischenspeicher, wobei der Sitzungs-Timeout-Zeitraum ausgebildet ist, um einen Sitzungsverbindungszustand eines Clients zu erkennen.

5. Verfahren zum Verwalten des Sitzungszustands nach Anspruch 4, wobei das Verfahren beim Durchführen des Initialisierungsvorgangs des Sitzungsdienstes auf Grundlage des Sitzungserstellungsergebnisses weiter umfasst:
in einem Fall, dass eine vom Proxy-Server weitergeleitete Client-Herzschlaganforderung innerhalb des Sitzungs-Timeout-Zeitraums empfangen wird, Aktualisieren des Sitzungs-Timeout-Zeitraums auf Grundlage der aktuellen Zeit; und
in einem Fall, dass die vom Proxy-Server weitergeleitete Client-Herzschlaganforderung nicht innerhalb des Sitzungs-Timeout-Zeitraums empfangen wird, Bestimmen, dass sich ein Client, der dem Sitzungsdienst entspricht, in einem Offline-Zustand befindet, Aktualisieren der Sitzungszustandsinformationen im lokalen Zwischenspeicher auf Grundlage des Offline-Zustands und Löschen des Sitzungs-Timeout-Zeitraums.

6. Verfahren zum Verwalten des Sitzungszustands nach Anspruch 4, wobei das Dienstverarbeitungsergebnis ein Sitzungsendergebnis ist; und
Bestimmen (S120) der Sitzungszustandsinformationen des Sitzungsdienstes auf Grundlage des Dienstverarbeitungsergebnisses und Aktualisieren der Sitzungszustandsinformationen auf den lokalen Zwischenspeicher umfasst:
Erzeugen zweiter Zustandsinformationen auf Grundlage des Sitzungsendergebnisses und Bestimmen der zweiten Zustandsinformationen als die Sitzungszustandsinformationen und Aktualisieren der Sitzungszustandsinformationen an den lokalen Zwischenspeicher.

7. Verfahren zum Verwalten des Sitzungszustands nach Anspruch 6, wobei das Verfahren vor dem Bestimmen der zweiten Zustandsinformationen als die Sitzungszustandsinformationen und Aktualisieren der Sitzungszustandsinformationen auf den lokalen Zwischenspeicher weiter umfasst:
Erfassen einer ersten verteilten Sperre, die dem Sitzungsendeergebnis entspricht, auf Grundlage der Sitzungskennung, wobei die erste verteilte Sperre dazu ausgebildet ist, das erneute Initiieren einer Sitzungsendeanforderung, die dem Sitzungsdienst entspricht, zu verhindern; und
nach Bestimmen der zweiten Zustandsinformationen als die Sitzungszustandsinformationen und Aktualisieren der Sitzungszustandsinformationen auf den lokalen Zwischenspeicher das Verfahren weiter umfasst:
Löschen des Sitzungs-Timeout-Zeitraums.

8. Verfahren zum Verwalten des Sitzungszustands nach Anspruch 1, wobei das Dienstverarbeitungsergebnis ein Streaming-Media-Verbindungsergebnis ist; und
Bestimmen (S120) der Sitzungszustandsinformationen des Sitzungsdienstes auf Grundlage des Dienstverarbeitungsergebnisses und Aktualisieren der Sitzungszustandsinformationen auf den lokalen Zwischenspeicher umfasst:
Erzeugen dritter Zustandsinformationen auf Grundlage des Streaming-Medienverbindungsergebnisses und Bestimmen der dritten Zustandsinformationen als die Sitzungszustandsinformationen und Aktualisieren der Sitzungszustandsinformationen an den lokalen Zwischenspeicher.

9. Verfahren zum Verwalten des Sitzungszustands nach Anspruch 8, wobei das Verfahren vor dem Bestimmen der dritten Zustandsinformationen als Sitzungszustandsinformationen und Aktualisieren der Sitzungszustandsinformationen auf den lokalen Zwischenspeicher weiter umfasst:
Erfassen einer zweiten verteilten Sperre, die dem Streaming-Media-Verbindungsergebnis entspricht, auf Grundlage der Sitzungskennung, wobei die zweite verteilte Sperre dazu ausgebildet ist, das erneute Initiieren einer Streaming-Media-Verbindungsanforderung, die dem Sitzungsdienst entspricht, zu verbieten; und
wenn die dritten Zustandsinformationen als die Sitzungszustandsinformationen bestimmt werden, das Verfahren weiter umfasst:
Initialisieren eines Streaming-Media-Verbindungs-Timeout-Zeitraums, wobei der Streaming-Media-Verbindungs-Timeout-Zeitraum ausgebildet ist, um einen Streaming-Media-Verbindungszustand eines Clients zu erkennen.

10. System zum Verwalten eines Sitzungszustands, umfassend: einen Dienstserver (15), einen Proxy-Server (11), einen Verarbeitungsserver (12) und einen lokalen Zwischenspeicher, wobei
der Dienstserver (15) dazu ausgebildet ist, einen Sitzungsdienst von einem ersten Client zu einem zweiten Client zu verarbeiten, ein Dienstverarbeitungsergebnis zu erzeugen, das dem Sitzungsdienst entspricht, und das Dienstverarbeitungsergebnis an den Proxy-Server (11) zu melden;
der Proxy-Server (11) ausgebildet ist, um das Dienstverarbeitungsergebnis an den Verarbeitungsserver (12), das dem Dienstverarbeitungsergebnis entspricht, auf Grundlage einer Sitzungskennung in dem Dienstverarbeitungsergebnis weiterzuleiten, wobei die Sitzungskennung Zuordnungsinformationen zwischen dem Dienstverarbeitungsergebnis und dem Verarbeitungsserver (12) entsprechend dem Dienstverarbeitungsergebnis umfasst, wobei der Verarbeitungsserver, der dem Dienstverarbeitungsergebnis entspricht, durch den Proxy-Server aus einer Vielzahl von Verarbeitungsservern vorgewählt wird, und die Sitzungskennung durch den Proxy-Server auf Grundlage der Zuordnungsinformationen zwischen dem Dienstverarbeitungsergebnis und dem entsprechenden Verarbeitungsserver erzeugt, an den Dienstserver zurückgegeben und zu den Dienstverarbeitungsergebnissen in nachfolgenden Uploads der Dienstverarbeitungsergebnisse durch den Dienstserver hinzugefügt wird; und sich der erste Client und der zweite Client in derselben Region oder in verschiedenen Regionen befinden, und in einem Fall, dass sich der erste Client und der zweite Client in verschiedenen Regionen befinden, die Sitzungskennung weiter Regionsinformationen umfasst;
der Verarbeitungsserver (12) dazu ausgebildet ist, das Dienstverarbeitungsergebnis zu empfangen, das dem von dem Proxy-Server (11) weitergeleiteten Sitzungsdienst entspricht, Sitzungszustandsinformationen des Sitzungsdienstes auf Grundlage des Dienstverarbeitungsergebnisses zu bestimmen und die Sitzungszustandsinformationen in den lokalen Zwischenspeicher zu aktualisieren; und
der lokale Zwischenspeicher ausgebildet ist, um die Sitzungszustandsinformationen zu einem Zwischenspeicher eines zugeordneten regionalen Rechenzentrums zu speichern und zu synchronisieren.

11. Verarbeitungsserver, umfassend: ein Empfangsmodul (21), das dazu ausgebildet ist, ein Dienstverarbeitungsergebnis zu empfangen, das einem von einem Proxy-Server weitergeleiteten Sitzungsdienst entspricht, wobei das Dienstverarbeitungsergebnis durch den Proxy-Server auf Grundlage einer Sitzungskennung in dem Dienstverarbeitungsergebnis an einen Verarbeitungsserver, der dem Dienstverarbeitungsergebnis entspricht, weitergeleitet wird, wobei die Sitzungskennung Zuordnungsinformationen zwischen dem Dienstverarbeitungsergebnis und dem Verarbeitungsserver, der dem Dienstverarbeitungsergebnis entspricht, umfasst, wobei das Dienstverarbeitungsergebnis von einem Dienstserver durch Verarbeiten eines Sitzungsdienstes von einem ersten Client zu einem zweiten Client erzeugt und von dem Dienstserver an den Proxy-Server gemeldet wird; wobei der Verarbeitungsserver, der dem Dienstverarbeitungsergebnis entspricht, von dem Proxy-Server aus einer Vielzahl von Verarbeitungsservern vorgewählt wird, und die Sitzungskennung durch den Proxy-Server auf Grundlage der Zuordnungsinformationen zwischen dem Dienstverarbeitungsergebnis und dem entsprechenden Verarbeitungsserver erzeugt, an den Dienstserver zurückgegeben und zu den Dienstverarbeitungsergebnissen in nachfolgenden Uploads der Dienstverarbeitungsergebnisse durch den Dienstserver hinzugefügt wird; und der erste Client und der zweite Client sich in derselben Region oder verschiedenen Regionen befinden, und in einem Fall, dass sich der erste Client und der zweite Client in verschiedenen Regionen befinden, die Sitzungskennung weiterhin Regionsinformationen umfasst; und
ein Aktualisierungsmodul (22), das dazu ausgebildet ist, Sitzungszustandsinformationen des Sitzungsdienstes auf Grundlage des Dienstverarbeitungsergebnisses zu bestimmen und die Sitzungszustandsinformationen in einem lokalen Zwischenspeicher zu aktualisieren, um die Sitzungszustandsinformationen über den lokalen Zwischenspeicher mit einem Zwischenspeicher eines zugeordneten regionalen Rechenzentrums zu synchronisieren.

12. Speichermedium, umfassend eine oder mehrere computerausführbare Anweisungen, wobei die eine oder mehreren computerausführbaren Anweisungen, wenn sie von einem Computerprozessor ausgeführt werden, den Computerprozessor veranlassen, das Verfahren zum Verwalten des Sitzungszustands, wie in einem der Ansprüche 1 bis 9 definiert, durchzuführen.

## Revendications

1. Procédé de gestion d'un état de session, mis en œuvre par un serveur de traitement, comprenant : la réception (S110) d'un résultat de traitement de service correspondant à un service de session transmis par un serveur mandataire, dans lequel le résultat de traitement de service est transmis par le serveur mandataire sur la base d'un identifiant de session dans le résultat de traitement de service à un serveur de traitement correspondant au résultat de traitement de service, l'identifiant de session comprenant des informations de mappage entre le résultat de traitement de service et le serveur de traitement correspondant au résultat de traitement de service, dans lequel le résultat de traitement de service est généré par un serveur de service en traitant un service de session d'un premier client à un deuxième client et rapporté par le serveur de service au serveur mandataire ; le serveur de traitement correspondant au résultat de traitement de service est présélectionné par le serveur mandataire parmi une pluralité de serveurs de traitement, et l'identifiant de session est généré par le serveur mandataire sur la base des informations de mappage entre le résultat de traitement de service et le serveur de traitement correspondant, renvoyé au serveur de service, et ajouté à des résultats de traitement de service dans des téléchargements ultérieurs des résultats de traitement de service par le serveur de service ; et le premier client et le deuxième client se situent dans une même région ou dans des régions différentes, et dans un cas où le premier client et le deuxième client se situent dans des régions différentes, l'identifiant de session comprend en outre des informations de région ; et
la détermination (S120) d'informations d'état de session du service de session sur la base du résultat de traitement de service, et la mise à jour des informations d'état de session vers un cache local de manière à synchroniser les informations d'état de session vers un cache d'un centre de données régional associé par l'intermédiaire du cache local.

2. Procédé de gestion de l'état de session selon la revendication 1, dans lequel, lors de la détermination (S120) des informations d'état de session du service de session sur la base du résultat de traitement de service, le procédé comprend en outre :
la mise à jour des informations d'état de session vers un intergiciel de messages préconstruit, dans lequel l'intergiciel de messages est configuré pour être utilisé pour qu'un serveur de service interroge les informations d'état de session, le serveur de service étant configuré pour traiter le service de session et générer le résultat de traitement de service, et rapporter le résultat de traitement de service au serveur mandataire.

3. Procédé de gestion de l'état de session selon la revendication 1, dans lequel le résultat de traitement de service est un résultat de création de session ; et
la détermination (S120) des informations d'état de session du service de session sur la base du résultat de traitement de service, et la mise à jour des informations d'état de session vers le cache local, comprennent :
la réalisation d'une opération d'initialisation du service de session sur la base du résultat de création de session, la génération de premières informations d'état, et la détermination des premières informations d'état comme étant les informations d'état de session et la mise à jour des informations d'état de session vers le cache local.

4. Procédé de gestion de l'état de session selon la revendication 3, dans lequel la réalisation de l'opération d'initialisation du service de session sur la base du résultat de création de session comprend en outre :
l'initialisation d'une période de temporisation de session du service de session sur la base du résultat de création de session, et le stockage de la période de temporisation de session dans le cache local, dans lequel la période de temporisation de session est configurée pour détecter un état de connexion de session d'un client.

5. Procédé de gestion de l'état de session selon la revendication 4, dans lequel, lors de la réalisation de l'opération d'initialisation du service de session sur la base du résultat de création de session, le procédé comprend en outre :
dans un cas où une demande de battement de coeur client transmise par le serveur mandataire est reçue dans la période de temporisation de session, la mise à jour de la période de temporisation de session sur la base du temps actuel ; et
dans un cas où la demande de battement de coeur client transmise par le serveur mandataire n'est pas reçue dans la période de temporisation de session, la détermination qu'un client correspondant au service de session est dans un état hors ligne, la mise à jour des informations d'état de session dans le cache local sur la base de l'état hors ligne, et la suppression de la période de temporisation de session.

6. Procédé de gestion de l'état de session selon la revendication 4, dans lequel le résultat de traitement de service est un résultat de fin de session ; et
la détermination (S120) des informations d'état de session du service de session sur la base du résultat de traitement de service, et la mise à jour des informations d'état de session vers le cache local, comprennent :
la génération de deuxièmes informations d'état sur la base du résultat de fin de session, et la détermination des deuxièmes informations d'état comme étant les informations d'état de session et la mise à jour des informations d'état de session vers le cache local.

7. Procédé de gestion de l'état de session selon la revendication 6, dans lequel, avant la détermination des deuxièmes informations d'état comme étant les informations d'état de session et la mise à jour des informations d'état de session vers le cache local, le procédé comprend en outre :
l'acquisition d'un premier verrou distribué correspondant au résultat de fin de session sur la base de l'identifiant de session, dans lequel le premier verrou distribué est configuré pour interdire l'initiation à nouveau d'une demande de fin de session correspondant au service de session ; et
lors de la détermination des deuxièmes informations d'état comme étant les informations d'état de session et de la mise à jour des informations d'état de session vers le cache local, le procédé comprend en outre :
la suppression de la période de temporisation de session.

8. Procédé de gestion de l'état de session selon la revendication 1, dans lequel le résultat de traitement de service est un résultat de connexion multimédia de diffusion en continu ; et
la détermination (S120) des informations d'état de session du service de session sur la base du résultat de traitement de service, et la mise à jour des informations d'état de session vers le cache local, comprennent :
la génération de troisièmes informations d'état sur la base du résultat de connexion multimédia de diffusion en continu, et la détermination des troisièmes informations d'état comme étant les informations d'état de session et la mise à jour des informations d'état de session vers le cache local.

9. Procédé de gestion de l'état de session selon la revendication 8, dans lequel, avant la détermination des troisièmes informations d'état comme étant les informations d'état de session et la mise à jour des informations d'état de session vers le cache local, le procédé comprend en outre :
l'acquisition d'un deuxième verrou distribué correspondant au résultat de connexion multimédia de diffusion en continu sur la base de l'identifiant de session, dans lequel le deuxième verrou distribué est configuré pour interdire l'initiation à nouveau d'une demande de connexion multimédia de diffusion en continu correspondant au service de session ; et
lors de la détermination des troisièmes informations d'état comme étant les informations d'état de session, le procédé comprend en outre :
l'initialisation d'une période de temporisation de connexion multimédia de diffusion en continu, dans lequel la période de temporisation de connexion multimédia de diffusion en continu est configurée pour détecter un état de connexion multimédia de diffusion en continu d'un client.

10. Système pour la gestion d'un état de session, comprenant : un serveur de service (15), un serveur mandataire (11), un serveur de traitement (12) et un cache local, dans lequel
le serveur de service (15) est configuré pour traiter un service de session d'un premier client à un deuxième client, générer un résultat de traitement de service correspondant au service de session, et rapporter le résultat de traitement de service au serveur mandataire (11) ;
le serveur mandataire (11) est configuré pour transmettre le résultat de traitement de service au serveur de traitement (12) correspondant au résultat de traitement de service sur la base d'un identifiant de session dans le résultat de traitement de service, dans lequel l'identifiant de session comprend des informations de mappage entre le résultat de traitement de service et le serveur de traitement (12) correspondant au résultat de traitement de service, dans lequel le serveur de traitement correspondant au résultat de traitement de service est présélectionné par le serveur mandataire parmi une pluralité de serveurs de traitement, et l'identifiant de session est généré par le serveur mandataire sur la base des informations de mappage entre le résultat de traitement de service et le serveur de traitement correspondant, renvoyé au serveur de service, et ajouté à des résultats de traitement de service dans des téléchargements ultérieurs des résultats de traitement de service par le serveur de service ; et le premier client et le deuxième client se situent dans une même région ou dans des régions différentes, et dans un cas où le premier client et le deuxième client se situent dans des régions différentes, l'identifiant de session comprend en outre des informations de région ;
le serveur de traitement (12) est configuré pour recevoir le résultat de traitement de service correspondant au service de session transmis par le serveur mandataire (11), déterminer des informations d'état de session du service de session sur la base du résultat de traitement de service, et mettre à jour les informations d'état de session vers le cache local ; et
le cache local est configuré pour stocker et synchroniser les informations d'état de session vers un cache d'un centre de données régional associé.

11. Serveur de traitement, comprenant : un module de réception (21), configuré pour recevoir un résultat de traitement de service correspondant à un service de session transmis par un serveur mandataire, dans lequel le résultat de traitement de service est transmis par le serveur mandataire sur la base d'un identifiant de session dans le résultat de traitement de service à un serveur de traitement correspondant au résultat de traitement de service, l'identifiant de session comprenant des informations de mappage entre le résultat de traitement de service et le serveur de traitement correspondant au résultat de traitement de service, dans lequel le résultat de traitement de service est généré par un serveur de service en traitant un service de session d'un premier client à un deuxième client et rapporté par le serveur de service au serveur mandataire ; le serveur de traitement correspondant au résultat de traitement de service est présélectionné par le serveur mandataire parmi une pluralité de serveurs de traitement, et l'identifiant de session est généré par le serveur mandataire sur la base des informations de mappage entre le résultat de traitement de service et le serveur de traitement correspondant, renvoyé au serveur de service, et ajouté à des résultats de traitement de service dans des téléchargements ultérieurs des résultats de traitement de service par le serveur de service ; et le premier client et le deuxième client se situent dans une même région ou dans des régions différentes, et dans un cas où le premier client et le deuxième client se situent dans des régions différentes, l'identifiant de session comprend en outre des informations de région ; et
un module de mise à jour (22), configuré pour déterminer des informations d'état de session du service de session sur la base du résultat de traitement de service, et mettre à jour les informations d'état de session vers un cache local de manière à synchroniser les informations d'état de session vers un cache d'un centre de données régional associé par l'intermédiaire du cache local.

12. Support de stockage comprenant une ou plusieurs instructions exécutables par ordinateur, dans lequel les une ou plusieurs instructions exécutables par ordinateur, lorsqu'elles sont exécutées par un processeur informatique, amènent le processeur informatique à réaliser le procédé de gestion de l'état de session tel que défini dans l'une quelconque des revendications 1 à 9.
